# EUROPEAN PATENT SPECIFICATION

(11) **EP 1 480 171 B1**
(45) Date of publication and mention of the grant of the patent: **02.11.2016**
(21) Application number: 03011579.4
(22) Date of filing: 22.05.2003
(51) Int. Cl.: G06T 11/00

(54) **Method and system for supersampling rasterization of image data**
Verfahren und Vorrichtung für SUPERSAMPLING-AUFRASTERUNG VON BILDDATEN
PROCEDE ET SYSTEME DE TRAMAGE PAR SUPERECHANTILLONAGE DE DONNEES D'IMAGE

(43) Date of publication of application: 24.11.2004
(73) Proprietor: Telefonaktiebolaget LM Ericsson (publ), 164 83 Stockholm (SE)
(72) Inventor: Akenine-Möller, Tomas, 416 78 Göteborg (SE)
(74) Representative: Ericsson

(56) References cited:
- WO-A-00/33256
- US-A1- 2002 140 706
- US-B1- 6 501 483
- KARUNAKARAN S ET AL: "REVIEW OF ESTABLISHED PROCEDURES OF IEC 481 FOR INTERMODULATION TEST" PROCEEDINGS OF THE INTERNATIONAL SYMPOSIUM ON ELECTROMAGNETIC COMPATIBILITY. WASHINGTON, AUG. 21 - 23, 1990, NEW YORK, IEEE, US, 21 August 1990 (1990-08-21), pages 492-494, XP002246880

## Description

### Technical Field

Generally, the present invention relates to graphic processing and more specifically to a method and apparatus for producing high-quality anti-aliased graphic pictures at high frame rates with low computational cost.

### Description of the Prior Art

Since the early days of computer graphics, aliasing has been a problem when presenting still or moving pictures on a display.

One approach to combat the low visual quality of aliased pictures is to use what is known as supersampling. Supersampling will provide a good picture quality but has the drawback of a low frame rate due to a heavy computational burden. More specifically, supersampling renders a picture at a higher resolution than the final resolution that is displayed on the screen. This is done by rendering multiple sub-pixel samples for each pixel to be displayed, i.e. the value of each pixel will be a weighted sum of the sub-pixel sample values. For example may each displayed pixel comprise the filtered, weighted sum of a group of four sub-pixel samples inside a pixel. This implies that the graphics hardware has to process four times as many samples for each displayed pixel compared to a single sample per pixel.

The patent document WO-00/33256 discloses a system that utilizes a supersampling scheme. Each pixel is divided into a more or less fine-meshed grid, which defines a sub-pixel grid, where sample points may be located. The sub-pixel sample points may be arranged in many different configurations inside the pixel boundaries. The sample point configuration pattern is then repeated for every pixel to be rendered. The final value for each pixel comprises the weighted sum of three or more samples located in sub-pixels according to the discussion above. A drawback with this approach is that it requires substantive computational and memory capabilities, as three or more samples have to be calculated and retrieved from the memory for the processing of each pixel.

In order to lower the computational burden for producing anti-aliased pixels, a modified supersampling scheme, which is referred to as a multisampling scheme, may be used. The key idea of a multisampling scheme is to share computations between samples. Furthermore, a multisampling scheme can also share samples between neighboring pixels (note that this is not the same as sharing computations). The latter multisampling scheme is referred to as a sample-sharing scheme.

The GeForce3 graphics processing unit from NVIDIA Corporation, Santa Clara, USA provides hardware that supports multisampling and sharing of sub samples between pixels. The multisampling scheme is referred to as "Quincunx" and presents a sub-pixel sample pattern in form of a "5" on a die, i.e. five sub-pixel samples are used for calculating the value of the final pixel. However, due to the placing of the sample locations, only two samples per pixel need to be calculated; the rest of the sample values are obtained from the neighboring pixels. The center sub-pixel sample is given the weight 0.5 while the peripheral sub-pixel samples are given the weight 0.125 each. In a subsequent step, the sub-pixel samples are filtered in the same way as with an ordinary supersampling scheme.

Detailed information regarding the Quincunx scheme may be found in "Technical Brief, HRAA: High-Resolution Antialiasing through Multisampling" from NVIDIA Corporation. This document is e.g. retrievable from the NVIDIA Corporation web site "www.nvidia.com".

A portable electronic equipment, such as a mobile radio terminal, a mobile telephone, an electronic organizer, a smartphone, etc. has limited battery capacity. Memory access is relatively power consuming compared to the available battery capacity in portable electronic equipment. Also, the memory capacity of such equipment is often limited. Thus, it is often preferred that a graphics process is as efficient as possible, wherein the memory access is as low as possible for providing an anti-aliased picture. Although the Quincunx scheme is more efficient than other super- or multi-sampling schemes known in the art, it still requires substantive computational capabilities.

Accordingly, the computational burden for producing anti-aliased pixels is a problem in modern electronic graphics systems. The problem is even more severe when an anti-aliasing scheme is to be used for producing moving pictures on a device with reduced computational capability and limited memory capacity.

US-B1-6 501 483 discloses a method and an apparatus for an anti-aliasing process that allows for super-sampling at high subpixel resolution. Each pixel is partitioned into an array that provides for a large number of subpixels, and a smaller set of super-samples from this set of subpixels are sampled and used to determine the resultant pixel values. The sampling points of the super-samples are provided within the borders of each pixel.

### Summary of the Invention

One object of the present invention is to provide a method and apparatus for producing high-quality anti-aliased pictures using a low computational power, wherein at least the memory requirements are reduced compared to the known related art.

According to a first aspect of the invention, this object is achieved by a sampling pattern covering an set of pixels, where each pixel is associated with a pattern of sample points, wherein a first of said points is provided approximately at a corner of the pixel. Second and third of said sample points may be provided at the borders of the pixel not intersecting the corner of the first sample. The sample point pattern of each pixel is a mirror image of and different from the pattern of a neighboring pixel.

By providing the samples at a corner and at two borders of the pixel, maximum three samples have to be retrieved from a memory for determining the final value of a pixel. Moreover, as the samples are provided at the borders of the pixel and one sample is shared between four pixels, and two samples are shared between two pixels each, only an average of 1.25 samples has to be calculated for the majority of the pixels of the set.

According to a second aspect of the invention, a method for creating a sampling pattern covering an set of pixels for use in an anti-aliasing system is disclosed. Each pixel has a pattern of sample points, which defines a mirror image of and which is different from the pattern of a neighboring pixel. A first sample point is provided at a corner of the pixel.

Second and third sample points may be defined at the borders of the pixel that are not intersecting the corner of the first sample.

According to a third aspect of the invention, an anti-aliased image is created according to the method of the invention.

According to a fourth aspect of the invention, an anti-aliasing system is disclosed comprising a GPU (Graphics Processing Unit), which is adapted to define a pattern of sample points of a pixel. The GPU is adapted to define the sample point pattern of each pixel so that it is a mirror image of and different from the pattern of a neighboring pixel. The GPU is also adapted to define a first sample point at a corner of the pixel.

The GPU may be implemented with software and/or hardware.

According to a fifth aspect of the invention, a computer program product is provided. Said product is associated with a CPU (Central Processing Unit) being operatively connected to a GPU for defining a pattern of sample points of a pixel. The product comprises program code portions for carrying out the method of the invention.

The invention may be used in an anti-aliasing system for e.g. processing a still image or a video sequence of still images.

The computer program product may be embodied on a computer-readable medium.

It is an advantage of the invention that only three samples have to be retrieved for calculating the final value of the pixel. Moreover, the positioning of one sample at a corner means that this sample may be shared between up to four pixels of an set of pixels. The sample pattern according to the invention decreases the computational burden as well as the memory requirements and memory bandwidth compared to multisampling schemes known in the art.

Further embodiments of the invention are defined in the dependent claims.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Further objects, features, and advantages of the invention will appear from the following description of several embodiments of the invention, wherein various aspects of the invention will be described in more detail with reference to the accompanying drawings, in which:
Fig. 1 is a schematic block diagram illustrating a graphics system for creating anti-aliased pictures;
Figs. 2a-d are schematic drawings illustrating the calculation of the sub-pixel sample points according to the present invention;
Fig. 3 is a schematic illustration of mirroring images according to the present invention;
Fig. 4 is a schematic illustration of an set of pixels according to the present invention;
Figs. 5a-b are flow charts of the method for producing anti-aliased pictures according to the present invention;
Figs. 6a-b are schematic illustrations of the calculation of pixel values according to the present invention compared to a prior art scheme; and
Fig. 7 is a graphic comparison between no anti-aliasing, a prior art scheme and the anti-aliasing scheme according to the present invention.

### Detailed Disclosure of a Preferred Embodiment

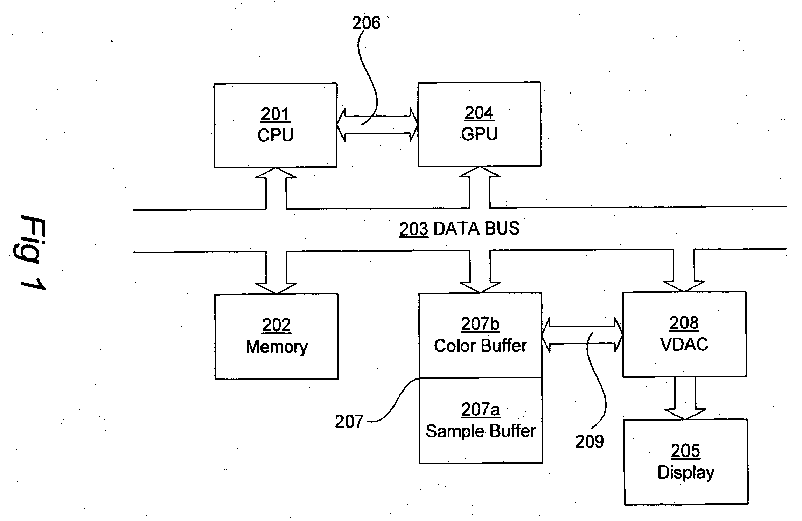

Fig. 1 is a block diagram of an example of a system for drawing lines or polygons. A CPU (Central Processing Unit) 201 is connected to a memory 202 by means of a data bus 203. The memory 202 may comprise computer readable instructions, such as code portions of an application program, which is run by the system. The application program may be a computer game or a CAD (Computer Aided Design) program. The CPU 201 retrieves instructions from the memory 202 and executes them in order to perform specific tasks. A task for the CPU 201 may be to provide a GPU 204 (Graphics Processing Unit) with information regarding the objects that shall be drawn on a display 205. The GPU 204 may be provided as a separate hardware component, such as a processor, a DSP (Digital Signal Processor), an ASIC (Application Specific Integrated Circuit), a FGPA (Field-Programmable Gate Array), hardwired logic etc. Alternatively, the GPU 204 is implemented with a combination of software and hardware, or it may be provided in software and executed by the CPU 201. The GPU 204 is connected to the data bus 203. Alternatively, or in addition, the GPU 204 is connected to the CPU 201 by means of a separate data bus 206, which may be a high-speed data bus, in case a lot of information is to be transferred between the CPU 201 and the GPU 204. The data transfer on the separate data bus 206 will then not interfere with the data traffic on the ordinary data bus 203.

A display memory 207 is connected to the data bus 203 and stores information sent from the GPU 204 regarding the pictures (frames) that shall be drawn on the display 205. The display memory comprises a sample buffer 207a for storing information of each sub-pixel sample and a color buffer 207b. The color buffer 207b holds the colors of the pixels to be displayed on the display 205 after the rendering of an image is completed. As with the interconnection between the CPU 201 and the GPU 204, the display memory 207 may be connected directly to the GPU 204 by means of a separate, high-speed bus (not shown). The display memory 207 may also form part of the memory 202. Since the GPU 204 and the display memory 207 normally are used for producing moving images, it is desirable that the link between these two units is as fast as possible and does not block the normal traffic on the data bus 203.

The display memory 207 is connected to a VDAC 208 (Video Digital to Analog Converter), either by means of the shared data bus 203 or by a separate high-speed bus 209. The VDAC 208 reads the information from the color buffer 207b and converts it to an analog signal, e.g. a RGB (Red, Green, Blue) composite signal, that is provided to the display 205 in order to draw the individual pixels on the screen.

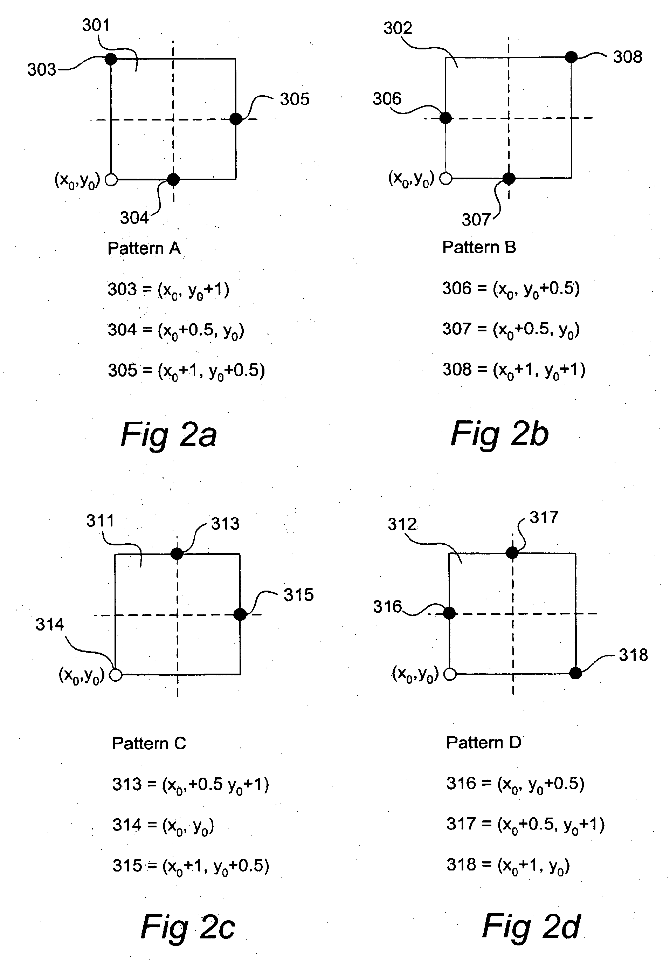

As discussed above, many different techniques have been used in order to produce anti-aliased representations of lines and polygons. Figs. 2a-2d illustrate a variant of a multisampling scheme according to the invention comprising three sub-pixel samples for each pixel 301, 302, 311, 312. The sub-pixel sample locations or points 303-308, 313-318 are placed at the borders of the pixel 301, 302, 311, 312. The borders functions as mirror planes for the sample sharing. As discussed above, this allows for sample sharing between different pixels 301, 302, 311, 312 in the display memory 207.

At least one of the sample locations 303-308, 313-318 is placed at a corner of each pixel 301, 302, 311, 312. The term "at a corner" when used in this description means that the sample is provided approximately at the corner of two intersection borders of the pixel. However, the corner sample may be positioned slightly displaced with regard to the actual corner, as long as the corner sample may be used for the calculation of up to four pixel values. The displacement that can be accepted to achieve a sufficient result has to be tested and evaluated for each specific implementation.

In the embodiment of Figs. 2a-d, a first sub-pixel sample location is defined for a corner of two borders of the pixel 301, 302, 311, 312. Second and third sub-pixel sample locations are defined for separate borders of the pixel 301, 302, 311, 312, which do not intersect the corner sub-pixel sample. In Fig. 2a-d, the second and third sample of each pixel is positioned at the center of the border between two corners. However, the second and third sample may be positioned at any position on the border as long as the sample may be used for the calculation of the values of two neighboring pixels. The actual position on the border has to be tested and evaluated in each specific implementation. Also, in Fig. 2a-d, the second and third samples are positioned on the borders with the same distance from a corner. However, the distance from a corner may be different for the second and third sample, and has to be tested and evaluated in each specific implementation.

Each of the samples is given a weight of 1/3, i.e. the sum of the weights equals 1. Thus, an alternative weight distribution is 0.2 for the first sample and 0.4 for each of the second and third sample. Other weights are possible within the scope of the invention and have to be tested and evaluated in each particular case

In Figs. 2a-2d a grid is superimposed over the pixel 301, 302, 311, 312 and defines a possible sample point at a corner and wherever the grid intersects an border not intersecting said corner of a pixel 301, 302, 311, 312. Exemplifying equations for determining the precise sample point pattern of each pixel are shown in Figs. 2a-2d, respectively.

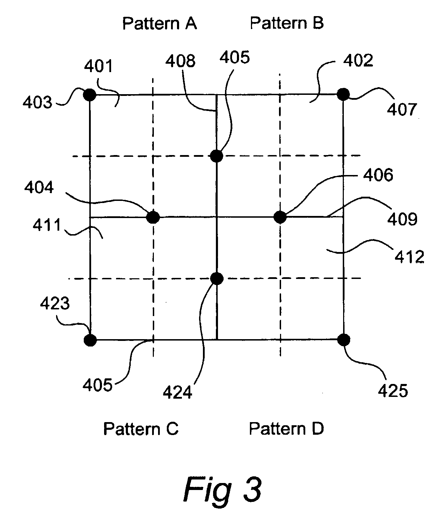

Alternatively, the borders of the pixels in the discussion above may be substituted by one or more mirror planes in case the sampling pattern is translated in any direction. The mirror planes will then normally be parallel with the borders of the pixels 301, 302, 311, 312 and with spacing equal to the distance between the borders of the pixels. For example, the sampling pattern may be translated a small amount to the left, wherein the sub-pixel sample locations no longer resides on the borders of the pixels. In this case it is still possible to define one or more mirroring planes for creating a sample pattern according to the present invention. This will become apparent by the discussion below in relation to figure 3.

The placing of the sample locations 303-308, 313-318 with one sample point at each mirror plane will break the symmetry of the configuration, which will increase the anti-aliasing effect of near to vertical lines and near to horizontal lines.

Fig. 3 illustrates one feature of the present invention. In accordance with the above, the leftmost pixel 401 comprises one sub-pixel sample location 403 at a corner and two sub-pixel sample locations 404-405 on separate borders of the pixel 401. In the following text, this sub-pixel sample configuration will be referred to as "pattern A". Correspondingly, a second pixel 402 presenting a sub-pixel sample configuration that is a mirror image of "pattern A" will be referred to as "pattern B". As can be seen in Fig. 3, the sub-pixel sample locations 405-407 in the upper rightmost pixel 402 correspond to the pattern B locations according to the above. By examining the configurations of pattern A and pattern B side-by-side it is evident that the sub-pixel sample locations 405-407 of pattern B are a mirror image of the corresponding locations 403-405 in pattern A. Pattern A is reflected at the right vertical border 408 of pixel 401 to form pattern B of pixel 402. Thus, Pattern B is a mirror image of Pattern A.

The sub-pixel sample locations of pattern A and pattern B may also be mirrored in their respective bottom horizontal border 409. A third pixel 411 presenting a sub-pixel sample configuration that is a mirror image of pattern A when it is mirrored in its bottom horizontal border will be referred to as "pattern C" in the following. Pattern C has sub-pixel sample locations 404, 423-424, wherein one of said locations is shared with pattern A. A fourth pixel 412 presenting a sub-pixel sample configuration that is a mirror image of pattern B when it is mirrored in its bottom horizontal border 409 will be referred to as "pattern D" in the following. Pattern D has sub-pixel sample locations 406, 424-425, wherein one sample is shared with pattern B and one sample is shared with pattern C.

By mirroring the locations of the sub-pixel sample locations 403-405 across the vertical border 408 it is possible to share the sample 405 between the two pixels 401, 402 and still break up the symmetry of the configuration and achieve a better anti-aliasing result according to the above. Another feature with the sample location configuration of the invention is that there is only one sample per sub-pixel row and column of a pixel. In e.g. Quincunx, there are two samples for the top row. Also, as will be discussed below, a corner sample may be shared between four pixels.

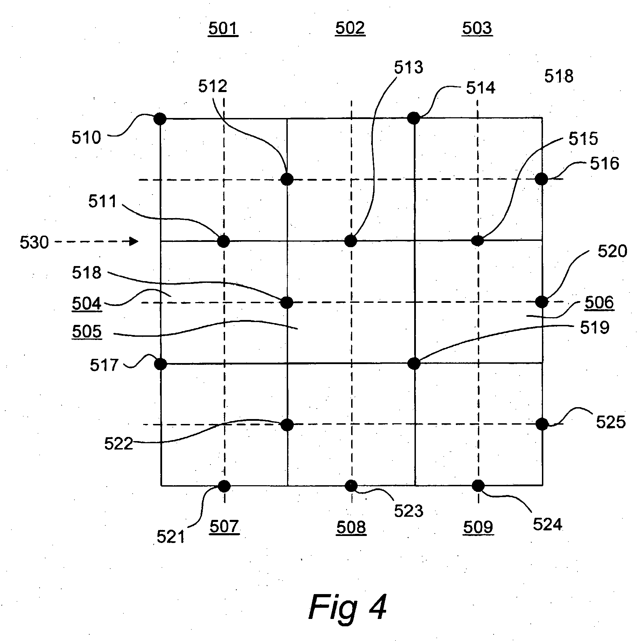

Fig. 4 illustrates the anti-aliasing scheme according to the present invention in a 3x3 pixel configuration comprising nine pixels 501-509. The upper leftmost first pixel 501 contains three sub-pixel sample locations 510-512 in a pattern A configuration. The second pixel 502 to the right of the first pixel 501 comprises three sub-pixel sample locations 512-514 in a pattern B configuration, which are mirrored at the right border of the upper leftmost pixel 501. Moreover, a third pixel 503 comprises three sub-pixel sample locations 514-516 in a pattern A configuration. As can be seen from figure 4, the upper row of pixels 501-503 share one sub-pixel sample location 512, 514 between each pair of pixels 501-502, 502-503.

Next row starts with a fourth pixel 504 presenting a pattern C configuration of sub-pixel sample locations 511, 517-518. The sample location 511 is shared between the fourth pixel 504 and the first pixel 501 on the row above. The next, fifth pixel 505 on the second row comprises three sub-pixel sample locations 513, 518-519 in a pattern D configuration. The fifth pixel 505 shares one sample point 513 with the second pixel 502 on the row above and one sample point 518 with fourth pixel 504 to the left. The same applies to the rightmost sixth pixel 506 on the second row having three sub-sample locations 515, 519-520, which also shares two sample points 515, 519 with the neighboring pixels 503, 505.

The third row starts with the seventh pixel 507 presenting a pattern A configuration of sub-pixel sample locations 517, 521-522. The sample location 517 is shared between the seventh pixel 507 and the fourth pixel 504 on the row above. The next, eighth pixel 508 on the third row comprises three sub-pixel sample locations 519, 522-523 in a pattern B configuration. The eighth pixel 508 shares one sample point 519 with the fifth pixel 505 on the row above and one sample point 522 with the seventh pixel 507 to the left. The same applies to the rightmost ninth pixel 509 on the third row having three sub-sample locations 519, 524-525 that shares one sample location 519 with the neighboring sixth pixel 506 above.

By examining Fig. 4, it is evident that all sub-pixel samples locations provided at a pixel corner except in the topmost row and the leftmost column are shared between four pixels. Thus, the majority (for a relatively large grid of pixels) of the corner sub-pixel samples only have to be calculated once for four pixels, wherein the calculation cost is 0.25 per pixel. The sub-pixel sample locations provided on the border not intersecting the borders of the corner pixel, which are shared between two pixels, will only have to be calculated once for two neighboring pixels. Thus, the calculation cost for these border pixels is 0.5 per pixel.

Consequently, by using the mirroring scheme of the present invention, all pixels, except for the uppermost and leftmost pixels 501-504, 507 on a display 205, require in average a calculation of only 1.25 (0.25+0.5+0.5=1.25) new sub-pixel sample location values for determining the final value of the pixels 501-509. Alternatively, all pixels except the rightmost column and the bottommost row require only 1.25 samples. This is a significant improvement compared to known multi-sampling configurations wherein at least two sub-pixel samples have to be calculated for determining the final value of a pixel.

The sample locations in the pixels may be traversed by scanning the lines from left to right. Alternatively, the scanning direction may be altered every other line in order to render the memory usage more effective. It is understood that any traversal scheme can be implemented in conjunction with the multi-sampling scheme according to the present invention.

By using the multisampling scheme according to the invention, it is only necessary to access the display memory 207 maximum three times to calculate the final value of a pixel. However, by providing an additional small and fast memory (not shown), such as an on-chip cache memory, for temporarily storing samples, which are needed in one or several subsequent computations of pixel values, it is possible to decrease the necessary access to the display memory 207 to a minimum of 1.25. By using this approach with the Quicunx scheme it is necessary to access a memory minimum 2 times for the calculation of the final value of a pixel. This is a substantial difference, as the filtering incurs a significant cost in memory bandwidth usage.

In still an alternative embodiment, an even smaller additional memory (not shown) may be utilized to store only one sample, i.e. the sample that is used for calculating the value of a first pixel and the calculation of a value of a subsequent pixel. With reference to Fig. 3, the final value of a pixel 401 is calculated by retrieving sample 403-405 from the display memory 207. Then, sample 405 is temporarily stored in the additional memory. For the computation of the final value of pixel 402, it is only necessary to retrieve sample 406-407 from the display memory 207, whereas the sample 405 may be retrieved from the additional memory. Consequently, it is only necessary to access the display memory 207 twice for the calculation of the majority of pixels of a large grid of pixels, such as a 176x174 pixel grid of a mobile terminal. By using this approach with the Quicunx scheme it is necessary to access a display memory 3 times and an additional memory twice for the calculation of the final value of a pixel.

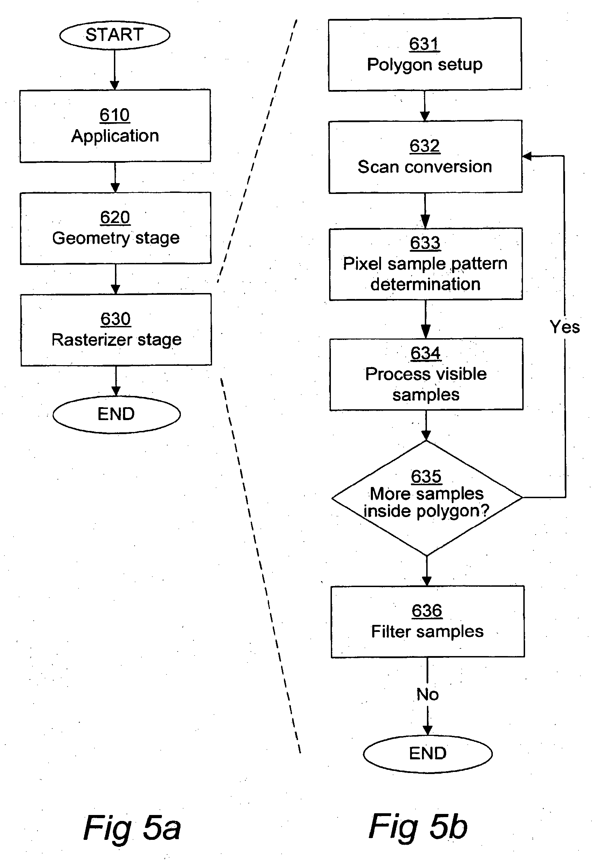

Figure 5a is a flow chart illustrating a method for producing high-quality anti-aliased pictures according to one embodiment of the present invention. In step 610 the CPU runs the application program (e.g. a computer game) and generates the 3D objects (normally polygons in form of triangles) that shall be converted into a 2D-presentation on the display.

Next, in step 620, the CPU or the GPU/hardware calculates the different visual parameters that affect the appearance of the object on the display, such as lighting, clipping, transformations, projections, etc. As triangles are normally used when creating 3-D objects in computer graphics, the pixel coordinates of the vertices of the triangles are finally calculated.

In step 630 the CPU or the GPU/hardware 204 interpolates texture coordinates over the polygon in order to ensure that a correct projection of the texture is obtained. The CPU 201 or GPU/hardware 204 may also interpolate one or more colors, another set of texture coordinates, fog, etc. It also performs Z-buffer tests, and ensures that the final pixel obtains the correct color.

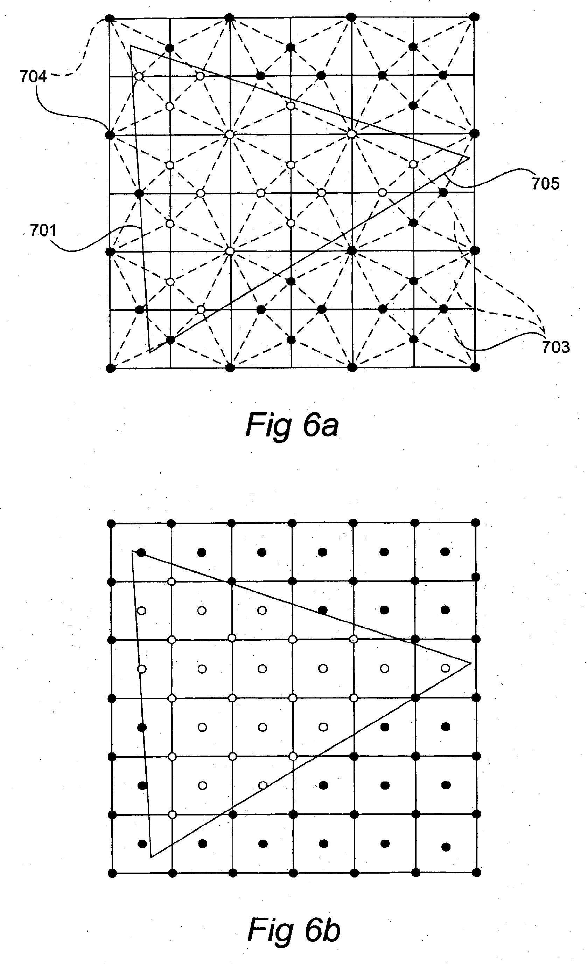

Figure 5b is a more detailed flow chart illustrating step 630 in figure 5a. To increase the intelligibility of the flow chart in figure 5b, references are also made to figure 6a.

Step 631 is a polygon (e.g. triangle) setup stage where the CPU 201 or the GPU/hardware 204 calculates interpolation data that is used over the entire polygon 701.

A scan conversion is performed in step 632, wherein the CPU or the GPU/hardware identifies pixels 703 or sample points 704 that lie inside the boundaries 705 of the polygon 701. There are many different ways to perform this identification. A simple approach is to scan the horizontal rows one by one.

In step 633, the sample point pattern of each pixel is determined, wherein the first second and third samples are provided so it is a mirror image of and different from the pattern of a neighboring pixel. Also, a first sample is defined at a corner of the sample, and a second and a third sample is defined on each of the borders of the pixel not intersecting the corner of the first sample.

All visible sample points 704 are transferred to step 634, in which the color of each visible sample is calculated by means of the textures and the interpolated color(s). The color of each sample is written to the sample buffer 207a. After all polygons of the picture have been processed, the sample buffer 207a will contain the picture in a high-resolution format (average 1.25 samples per pixel of the final image). Only visible samples are processed in this stage. Samples that are not visible, i.e. samples that are behind a previously drawn polygon, will not contribute to the final picture. In step 635 it is determined whether any more samples are inside the polygon. If so, the procedure returns to step 632. Otherwise the procedure will continue in step 636. In the final step 636, the visible samples are filtered to produce a final image of correct size. More specifically, three samples per pixel will be averaged to form the final pixel color stored in the color buffer 207b. Each sample may be given the weight 1/3. Alternatively, unevenly distributed weights may be used.

With reference to Fig. 6a and 6b, a comparison will now be made between the Quincunx scheme and the scheme according to the present invention. The sub-pixel sampling pattern according to the present invention is illustrated in figure 6a, and the sub-pixel sampling pattern according to the Quincunx scheme is illustrated in figure 6b.

Assume that the inside of a polygon is colored white (encoded as 1.0), and the outside colored black (encoded as 0.0). Anything in between 0.0 and 1.0 represents a gray scale. Also, it should be noted that the same applies as well to colors or any other representation. As can be seen from the figures of this example, a polygon, in this case a triangle, is covering a 6x6 pixel matrix. The number of pixels is not restricted to this number and depends on the specific application, i.e. a desktop computer system will use a higher resolution (more pixels) than e.g. a mobile telephone. The same working principle applies to any system irrespective of the resolution of the system. In Fig. 6a, pixels that have three samples completely within the polygon will obtain the value 1 (completely white). In the scheme according to the present invention, this value arises from the summing-up of the two border and one corner sampling locations (each with the weight 1/3). In the Quincunx scheme of Fig. 6b, this arises from the summing-up of the corner samples (each with the weight 0.125) and the center sample (with weight 0.5).

In figure 6a, the leftmost column will obtain the values (from top to bottom): 1/3, 2/3, 1/3, 1/3, 1/3, and 0, where each number represents a gray scale color. That is, the left border of the polygon 705 will have a shade of gray except at the bottommost vertex, which will be black. Thus, two gray shades having an even distribution may be provided with the invention although only three samples have to be stored and retrieved for each pixel. Since only three samples are required according to the invention, less memory bandwidth is required to retrieve the necessary samples and less memory bandwidth in the final filtering stage compared to sampling schemes known in the art.

In figure 6b where the Quincunx scheme is used, the leftmost column will obtain the values: 0.125, 0.75, 0.75, 0,25, 0.25, and 0.125. What is important is the abrupt jump between the first and second and third and fourth pixel in the column. As mentioned above, the calculated pixel values for a near to vertical line will always make an abrupt jump from 0.25 to 0.75 when the Quincunx scheme is used, even though it is theoretically possible to obtain a value of 0.375, 0.5, and 0.625. On the other hand, the mirroring scheme according to the present invention will give a smoother transition between the different possible pixel values. Also, five samples have to be retrieved when the Quincunx scheme is used although only two gray shades are provided. Thus, a considerably less amount of calculations have to be made when the scheme according to the invention is used.

Aliasing is very noticeable when drawing almost vertical lines and almost horizontal lines, and thus it is important that the anti-aliasing scheme produces good result when borders are near to vertical or near to horizontal.

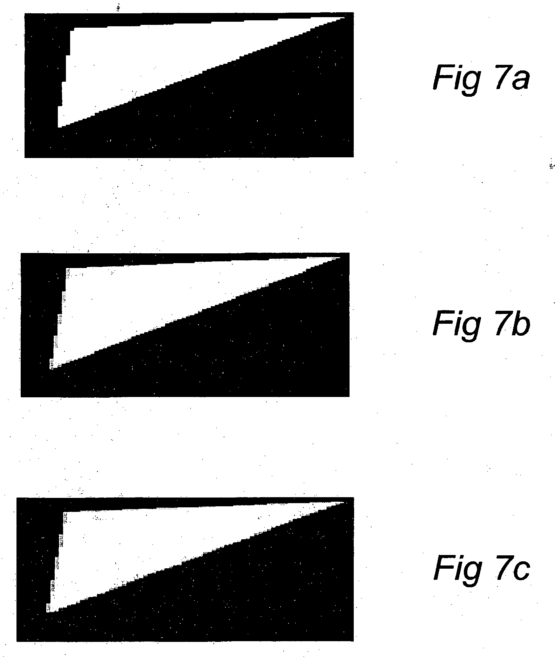

The above reasoning is further illustrated in figures 7a-c, where a comparison between no anti-aliasing 7a, the Quincunx scheme 7b, and the scheme according to the present invention 7c is shown. The figures clearly illustrates that the anti-aliasing effect for both for a near to vertical as well as for a diagonal line is enhanced by the scheme according to the present invention compared to no anti-aliasing. Moreover, the figures also illustrates that the anti-aliasing effect of the invention is about as good as for the Quincunx scheme although the Quincunx scheme suffers from a heavier computational burden.

The present invention has been described above with reference to specific embodiments. However, other embodiments than the above described are equally possible within the scope of the invention. Different method steps than those described above, performing the method by hardware or software, may be provided within the scope of the invention. The different features and steps of the invention may be combined in other combinations than those described. The invention is only limited by the appended patent claims.

## Claims

1. A Computer implemented method for creating a sampling pattern covering a set of pixels (501-509) for use in an anti-aliasing system, the method comprising the step of determining a sample point pattern of each pixel, **characterized by** the steps of
determining the sample point pattern of each pixel so that it is a mirror image of and different from a sample point pattern of a neighboring pixel; and
defining a first sample point on an intersectional point of a first and a second border of said pixel.

2. The method according to claim 1, comprising the step of using said first sample point for the pixel point pattern of up to four neighboring pixels.

3. The method according to claim 1 or 2, further comprising the step of:
defining a second and a third sample point on a third and a fourth border of the pixel, said second and third border being different from the first and the second border.

4. The method according to any of the previous claims, wherein the (x, y) coordinates of the sample points for a pixel are defined with the relationship (0, 1), (a, 0), and (1, b).

5. The method according to any of the claims 1-3, wherein the (x, y) coordinates of the sample points for a pixel are defined with the relationship (0, b), (1-a, 0), and (1, 1).

6. The method according to any of the claims 1-3, wherein the (x, y) coordinates of the sample points for a pixel are defined with the relationship (0, 0), (a, 1), and (1, 1-b).

7. The method according to any of the claims 1-3, wherein the (x, y) coordinates of the sample points for a pixel are defined with the relationship (1-a, 1), (0, 1-b), and (1, 0).

8. The method according to any of the claims 4 to 7, wherein a=b=0.5.

9. An anti-aliasing system comprising a GPU (204), wherein the GPU is adapted to define a pattern of sample points of a set of pixels, **characterized in that** said GPU is adapted to:
determine the sample point pattern of each pixel so that it is a mirror image of and different from the sample point pattern of a neighboring pixel; and
define a first sample point on an intersectional point of a first and a second border of said pixel.

10. The system according to claim 9, wherein the GPU is adapted use a sample sampled at the first sample point when determining a pixel value for up to four neighboring pixels.

11. The system according to claim 9 or 10, wherein the GPU (204) is further adapted to define a second and a third sample point on a third and forth border of the pixel, said third and fourth border being different from the first and the second border.

12. The system according to any of the claims 9-11, wherein the GPU (204) is implemented with hardware.

13. The system according to any of the claims 9-11, wherein the GPU (204) is implemented with software.

14. The system according to any of the claims 9-11, wherein the GPU (204) is implemented with software and hardware.

15. The system according any of the claims 9-14, wherein the (x, y) coordinates of the sample points for a pixel are related according to (0, 1), (a, 0), and (1, b).

16. The system according to any of the claims 9-14, wherein the (x, y) coordinates of the sample points for a pixel are related according to (0, b), (1-a, 0), and (1, 1).

17. The system according to any of the claims 9-14, wherein the (x, y) coordinates of the sample points for a pixel are related according to (0, 0), (a, 1), and (1, 1-b) .

18. The system according to any of the claims 9-14, wherein the (x, y) coordinates of the sample points for a pixel are related according to (1-a, 1), (0, 1-b), and (1, 0).

19. The system according to any of the claims 15-18, wherein a=b=0.5.

20. A computer program product directly loadable into a memory (202), comprising program code portions for carrying out the method according to claim 12-18 when said product is run by a CPU (201) being operatively connected to a GPU (204).

21. A computer program product according to claim 20, embodied on a computer-readable medium.

## Patentansprüche

1. Computerimplementiertes Verfahren zur Erstellung eines Abtastmusters, das eine Menge von Pixeln (501 - 509) umfasst, zur Verwendung in einem Antialiasingsystem, wobei das Verfahren den Schritt des Bestimmens eines Abtastpunktmusters jedes Pixels umfasst und durch die folgenden Schritte gekennzeichnet ist:
derartiges Bestimmen des Abtastpunktmusters jedes Pixels, dass es ein Spiegelbild eines Abtastpunktmusters eines Nachbarpixels und verschieden davon ist; und
Definieren eines ersten Abtastpunkts an einem Schnittpunkt eines ersten und eines zweiten Randes des Pixels.

2. Verfahren nach Anspruch 1, umfassend den Schritt des Verwendens des ersten Abtastpunkts für das Pixelpunktmuster von bis zu vier Nachbarpixeln.

3. Verfahren nach Anspruch 1 oder 2, ferner umfassend den folgenden Schritt:
Definieren eines zweiten und eines dritten Abtastpunkts an einem dritten und einem vierten Rand des Pixels, wobei der dritte und der vierte Rand vom ersten und zweiten Rand verschieden sind.

4. Verfahren nach einem der vorhergehenden Ansprüche, wobei die (x, y)-Koordinaten der Abtastpunkte für ein Pixel mit der Beziehung (0, 1), (a, 0) und (1, b) definiert werden.

5. Verfahren nach einem der Ansprüche 1 - 3, wobei die (x, y)-Koordinaten der Abtastpunkte für ein Pixel mit der Beziehung (0, b), (1-a, 0) und (1, 1) definiert werden.

6. Verfahren nach einem der Ansprüche 1 - 3, wobei die (x, y)-Koordinaten der Abtastpunkte für ein Pixel mit der Beziehung (0, 0), (a, 1) und (1, 1-b) definiert werden.

7. Verfahren nach einem der Ansprüche 1 - 3, wobei die (x, y)-Koordinaten der Abtastpunkte für ein Pixel mit der Beziehung (1-a, 1), (a, 1-b) und (1, 0) definiert werden.

8. Verfahren nach einem der Ansprüche 4 - 7, wobei a = b = 0, 5.

9. Antialiasingsystem, umfassend eine GPU (204), wobei die GPU so ausgelegt ist, dass sie ein Muster von Abtastpunkten einer Menge von Pixeln definiert, **dadurch gekennzeichnet, dass** die GPU ausgelegt ist zum:
derartigen Bestimmen des Abtastpunktmusters jedes Pixels, dass es ein Spiegelbild des Abtastpunktmusters eines Nachbarpixels und verschieden davon ist; und
Definieren eines ersten Abtastpunkts an einem Schnittpunkt eines ersten und eines zweiten Randes des Pixels.

10. System nach Anspruch 9, wobei die GPU so ausgelegt ist, dass sie einen am ersten Abtastpunkt abgetasteten Abtastwert verwendet, wenn sie einen Pixelwert für bis zu vier Nachbarpixel bestimmt.

11. System nach Anspruch 9 oder 10, wobei die GPU (204) ferner so ausgelegt ist dass sie einen zweiten und einen dritten Abtastpunkt an einem dritten und einem vierten Rand des Pixels definiert, wobei der dritte und der vierte Rand vom ersten und zweiten Rand verschieden sind.

12. System nach einem der Ansprüche 9 - 11, wobei die GPU (204) mit Hardware implementiert ist.

13. System nach einem der Ansprüche 9 - 11, wobei die GPU (204) mit Software implementiert ist.

14. System nach einem der Ansprüche 9 - 11, wobei die GPU (204) mit Software und Hardware implementiert ist.

15. System nach einem der Ansprüche 9 - 14, wobei die (x, y)-Koordinaten der Abtastpunkte für ein Pixel gemäß (0, 1), (a, 0) und (1, b) in Beziehung stehen.

16. System nach einem der Ansprüche 9 - 14, wobei die (x, y)-Koordinaten der Abtastpunkte für ein Pixel gemäß (0, b), (1-a, 0) und (1, 1) in Beziehung stehen.

17. System nach einem der Ansprüche 9 - 14, wobei die (x, y)-Koordinaten der Abtastpunkte für ein Pixel gemäß (0, 0), (a, 1) und (1, 1-b) in Beziehung stehen.

18. System nach einem der Ansprüche 9 - 14, wobei die (x, y)-Koordinaten der Abtastpunkte für ein Pixel gemäß (1-a, 1), (0, 1-b) und (1, 0) in Beziehung stehen.

19. System nach einem der Ansprüche 15 - 18, wobei a = b = 0,5.

20. Computerprogrammprodukt, das direkt in einen Speicher (202) geladen werden kann und Programmcodeabschnitte zum Durchführen des Verfahrens nach Anspruch 12 - 18 umfasst, wenn das Produkt von einer CPU (201) ausgeführt wird, die funktionell mit einer GPU (204) verbunden ist.

21. Computerprogrammprodukt nach Anspruch 20, das auf einem computerlesbaren Medium enthalten ist.

## Revendications

1. Procédé mis en oeuvre par ordinateur pour créer un motif d'échantillonnage couvrant un ensemble de pixels (501-509) destiné à être utilisé dans un système antirepliement, le procédé comprenant l'étape de la détermination d'un motif de points d'échantillon de chaque pixel, **caractérisé par** les étapes de :
la détermination du motif de points d'échantillon de chaque pixel de sorte qu'il soit une image en miroir et différent d'un motif de points d'échantillon d'un pixel voisin ; et
la définition d'un premier point d'échantillon à un point d'intersection d'une première bordure et d'une deuxième bordure dudit pixel.

2. Procédé selon la revendication 1, comprenant l'étape de l'utilisation dudit premier point d'échantillon pour le motif de points de pixel de jusqu'à quatre pixels voisins.

3. Procédé selon la revendication 1 ou 2, comprenant en outre l'étape de :
la définition d'un deuxième et d'un troisième points d'échantillon sur une troisième et une quatrième bordures du pixel, lesdites deuxième et troisième bordures étant différentes desdites première et deuxième bordures.

4. Procédé selon l'une quelconque des revendications précédentes, dans lequel les coordonnées (x, y) des points d'échantillon pour un pixel sont définies par la relation (0, 1), (a, 0) et (1, b).

5. Procédé selon l'une quelconque des revendications 1 - 3, dans lequel les coordonnées (x, y) des points d'échantillon pour un pixel sont définies par la relation (0, b), (1-a, 0) et (1, 1).

6. Procédé selon l'une quelconque des revendications 1 - 3, dans lequel les coordonnées (x, y) des points d'échantillon pour un pixel sont définies par la relation (0, 0), (a, 1) et (1, 1-b).

7. Procédé selon l'une quelconque des revendications 1 - 3, dans lequel les coordonnées (x, y) des points d'échantillon pour un pixel sont définies par la relation (1-a, 1), (0, 1-b) et (1, 0).

8. Procédé selon l'une quelconque des revendications 4 - 7, dans lequel a=b=0,5.

9. Système antirepliement comprenant une GPU (204), dans lequel la GPU est apte à définir un motif de points d'échantillon d'un ensemble de pixels, **caractérisé en ce que** ladite GPU est apte à effectuer :
la détermination du motif de points d'échantillon de chaque pixel de sorte qu'il soit une image en miroir et différent du motif de points d'échantillon d'un pixel voisin ; et
la définition d'un premier point d'échantillon à un point d'intersection d'une première bordure et d'une deuxième bordure dudit pixel.

10. Système selon la revendication 9, dans lequel la GPU est apte à utiliser un échantillon échantillonné au premier point d'échantillon lors de la détermination d'une valeur de pixel pour jusqu'à quatre pixels voisins.

11. Système selon la revendication 9 ou 10, dans lequel la GPU (204) est en outre apte à effectuer la définition d'un deuxième et d'un troisième points d'échantillon sur une troisième et une quatrième bordures du pixel, lesdites troisième et quatrième bordures étant différentes desdites première et deuxième bordures.

12. Système selon l'une quelconque des revendications 9 - 11, dans lequel la GPU (204) est mise en oeuvre sous forme matérielle.

13. Système selon l'une quelconque des revendications 9 - 11, dans lequel la GPU (204) est mise en oeuvre sous forme logicielle.

14. Système selon l'une quelconque des revendications 9 - 11, dans lequel la GPU (204) est mise en oeuvre sous forme logicielle et matérielle.

15. Système selon l'une quelconque des revendications 9 - 14, dans lequel les coordonnées (x, y) des points d'échantillon pour un pixel sont liées en fonction de (0, 1), (a, 0) et (1, b).

16. Système selon l'une quelconque des revendications 9 - 14, dans lequel les coordonnées (x, y) des points d'échantillon pour un pixel sont liées en fonction de (0, b), (1-a, 0) et (1, 1).

17. Système selon l'une quelconque des revendications 9 - 14, dans lequel les coordonnées (x, y) des points d'échantillon pour un pixel sont liées en fonction de (0, 0), (a, 1) et (1, 1-b).

18. Système selon l'une quelconque des revendications 9 - 14, dans lequel les coordonnées (x, y) des points d'échantillon pour un pixel sont liées en fonction de (1-a, 1), (0, 1-b) et (1, 0).

19. Système selon l'une quelconque des revendications 15 - 18, dans lequel a=b=0,5.

20. Produit de programme informatique chargeable directement dans une mémoire (202), comprenant des portions de code de programme pour effectuer le procédé selon les revendications 12 - 18 lorsque ledit produit est exécuté par une CPU (201) qui est reliée de manière opérationnelle à une GPU (204).

21. Produit de programme informatique selon la revendication 20, réalisé sur un support lisible par ordinateur.
